# EUROPÄISCHE PATENTSCHRIFT

(11) **EP 4 112 565 B1**
(45) Veröffentlichungstag und Bekanntmachung des Hinweises auf die Patenterteilung: **31.07.2024**
(21) Anmeldenummer: 21182926.2
(22) Anmeldetag: 30.06.2021
(51) Int. Cl.: C02F 1/76, C02F 103/32

(54) **VERFAHREN ZUR KONTROLLE DES WACHSTUMS VON MIKROORGANISMEN**
METHOD OF CONTROLLING MICROORGANISM GROWTH
PROCÉDÉ POUR CONTROLLER LA CROISSANCE DES MICRO-ORGANISMES

(43) Veröffentlichungstag der Anmeldung: 04.01.2023
(73) Patentinhaber: Red Bull GmbH, 5330 Fuschl am See (AT)
(72) Erfinder: Hans, Klemens, 5330 Fuschl am See (AT); Herzog, Daniel, 5330 Fuschl am See (AT)
(74) Vertreter: Schwarz & Partner Patentanwälte GmbH

(56) Entgegenhaltungen:
- CN-A- 110 615 520
- US-A1- 2007 081 573
- US-A1- 2011 024 367
- US-B2- 7 922 933

## Beschreibung

### TECHNISCHES GEBIET

Die vorliegende Erfindung betrifft das Gebiet der Kontrolle des Wachstums von Mikroorganismen in industriellen Anlagen.

### HINTERGRUND DER ERFINDUNG

Die Kontrolle der mikrobiellen Belastung ist bei vielen industriellen Prozessen entscheidend, um qualitativ hochwertige und haltbare Produkte herstellen zu können, und um Anlagen, auf denen diese Prozesse durchgeführt werden, hygienisch sauber und funktionstüchtig zu halten. Vor allem im Lebensmittelbereich hat die Kontrolle des mikrobiellen Wachstums höchste Priorität, da dabei auch die Haltbarkeit des hergestellten Produkts eine große Rolle spielt.

Das unerwünschte und unkontrollierte Wachstum von Mikroben, insbesondere von Bakterien und Pilzen, in industriellen Anlagen, welche zumindest teilweise mit Wasser betrieben werden (z.B. Pasteurisierungsanlagen, Kochanlagen), ist ein bekanntes Problem, welches in unterschiedlichster Weise gelöst wird. Dabei werden sowohl chemische als auch mechanische und thermische Verfahren eingesetzt, wobei das Wachstum von Mikroben an sich in den meisten Fällen chemisch und/oder thermisch kontrolliert wird.

Je nach Einsatzgebiet ist der Einsatz von chemischen Verfahren zur Kontrolle von Mikroorganismen sehr verbreitet und wird in vielen Fällen von thermischen Maßnahmen begleitet. Der Einsatz von wässrigen Lösungen umfassend bestimmte Verbindungen ist trotz der guten Effizienz gegenüber Mikroorganismen nachteilig, da einige der eingesetzten Verbindungen aufgrund derer Toxizität im Lebensmittelbereich nur bedingt verwendbar sind. Ein weiterer Nachteil vieler chemischer Verbindungen ist, dass diese in wässriger Lösung korrosionsfördernd sind. D.h. industrielle Anlagen, welche Komponenten aus Metall, insbesondere aus Stahl bzw. Edelstahl umfassen, können durch den Einsatz bestimmter antimikrobieller Verbindungen erhöhter Korrosion ausgesetzt sein.

Im Lebensmittelbereich, beispielsweise, wirken sich korrosive wässrige Lösungen nicht nur negativ auf die industriellen Anlagen, in denen diese eingesetzt werden, sondern auch auf metallische Behältnisse aus, welche mit Lebensmitteln befüllt und mit der korrosiven Lösung in Kontakt gebracht werden (z.B. Dosen oder mit metallischen Verschlüssen versehene Flaschen in Pasteurisierungsanlagen). Einige relevante Dokumente sind US 7 922 933 B2, US 2007/081573 A1, US 2011/024367 A1 und CN 110 615 520 A.

Es ist somit eine Aufgabe der vorliegenden Erfindung ein Verfahren bereitzustellen, welches es ermöglicht, das Wachstum von Mikroorganismen in Prozesswasser zu kontrollieren, wobei das Prozesswasser eine geringe Korrosionsrate gegenüber Metallen aufweisen soll.

### ZUSAMMENFASSUNG DER ERFINDUNG

Es hat sich überraschenderweise gezeigt, dass die mikrobielle Belastung in Prozesswasser durch die Zugabe von Chlordioxid in Form einer Chlordioxid-haltigen wässrigen Lösung besonders gut kontrolliert bzw. reduziert werden kann, sofern durch die Zugabe des Chlordioxids das Redoxpotential im Prozesswasser auf einen Wert von 400 bis 800 mV eingestellt wird. Insbesondere durch die kombinierte Einstellung eines definierten Redoxpotentials (eingestellt mit einer Chlordioxid-haltigen wässrigen Lösung) und eines definierten pH-Werts zeigt eine besonders hohe Effektivität sowohl gegenüber dem unerwünschten Wachstum von Mikroorganismen im Prozesswasser als auch gegenüber der unerwünschten Bildung von Biofilmen an Oberflächen der industriellen Anlage, in der sich das Prozesswasser befindet. Aus diesem Grund weist die erfindungsgemäß eingesetzte Chlordioxid-haltige wässrige Lösung einen pH-Wert von 4 bis 7,5 auf. Das Prozesswasser, in dem die Chlordioxid-haltige Lösung eingebracht wird, weist zudem eine Temperatur von 5 bis 50°C auf. Eine zu hohe Temperatur des Prozesswassers führt dazu, dass Chlordioxid aus dem Prozesswasser austreibt und die Sicherheit der Anlage und des Arbeitspersonals, welches die Anlage betreibt, gefährdet. Zudem reduziert sich mit steigenden Temperaturen die Löslichkeit von Chlordioxid in Wasser, wodurch sich die Konzentration des im Prozesswasser gelösten Chlordioxids reduziert.

Es hat sich zudem gezeigt, dass der pH-Wert und das (molare) Verhältnis von Chlordioxid zu Chloridionen in der Chlordioxid-haltigen Lösung einen wesentlichen Einfluss auf die Korrosivität der Lösung bzw. des Prozesswassers hat. Ein pH-Wert der Chlordioxid-haltigen Lösung von weniger als 4 führt zu einer höheren Korrosivität des Prozesswassers, da deren pH-Wert durch die Zugabe der Chlordioxid-haltigen Lösung beeinflusst wird. Beträgt das Verhältnis von Chlordioxid zu Chloridionen in der Chlordioxid-haltigen wässrigen Lösung Verhältnis zudem mehr als 1, ist die Korrosivität des Prozesswassers signifikant reduziert. Beträgt das Verhältnis von Chlordioxid zu Chloridionen in der Chlordioxid-haltigen wässrigen Lösung sogar mehr als 1,5, vorzugsweise mehr als 2, noch mehr bevorzugt mehr als 3, noch mehr bevorzugt mehr als 5, noch mehr bevorzugt mehr als 10, noch mehr bevorzugt mehr als 100, kann die Korrosivität nochmals reduziert werden.

Überraschenderweise hat sich ergeben, dass es von Vorteil ist, dass die Chlordioxid-haltige wässrige Lösung bei einer mit destillierten Wasser eingestellten Chlordioxidkonzentration von 1000 ppm eine Korrosionsrate auf Stahl 1.4301 von weniger als 0,6 mm/Jahr, vorzugsweise von weniger als 0,55 mm/Jahr, noch mehr bevorzugt von weniger als 0,5 mm/Jahr, bei Raumtemperatur und/oder bei einer mit destillierten Wasser eingestellten Chlordioxidkonzentration von 50 ppm eine Korrosionsrate auf Stahl 1.4301 von weniger als 0,25 mm/Jahr, vorzugsweise von weniger als 0,20 mm/Jahr, bei Raumtemperatur zeigt. Dadurch ist es möglich, die Korrosion in der industriellen Anlage drastisch zu reduzieren, ohne die Wirkung gegenüber Mikroorganismen zu beeinträchtigen.

### BESCHREIBUNG DER AUSFÜHRUNGSFORMEN

Das erfindungsgemäße Verfahren kann zur Kontrolle bzw. Hemmung des Wachstums von Mikroorganismen wie Bakterien und Pilze eingesetzt werden. Durch die oxidative Wirkung von Chlordioxid wird das Wachstum von Zellen im Allgemeinen (sämtliche prokaryotische und eukaryotische Zellen) und insbesondere von Mikroorganismen gehemmt. Mit dem erfindungsgemäßen Verfahren können nicht nur planktonische Mikroorganismen kontrolliert werden, sondern das Verfahren verhindert bzw. reduziert die Bildung von Biofilmen an Oberflächen von industriellen Anlagen.

Durch die Verwendung einer Chlordioxid-haltigen wässrigen Lösung, die bei einer Chlordioxidkonzentration von 1000 ppm eine Korrosionsrate auf Stahl 1.4301 von weniger als 0,6 mm/Jahr bei Raumtemperatur aufweist, reduziert sich die Korrosionsrate des Prozesswassers auf die industrielle Anlage drastisch ohne die antimikrobielle Wirkung zu beeinträchtigen. Die Korrosionsrate wird erfindungsgemäß gemäß dem Standard ASTM G31-72 bestimmt. Dabei wird eine Chlordioxid-haltige wässrige Lösung hergestellt, welche 1000 ppm (1000 mg/l) Chlordioxid umfasst. Chlordioxid wird zur Herstellung dieser Chlordioxid-haltigen Testlösung in destilliertes Wasser bei 25°C eingeleitet, bis diese Testlösung 1000 ppm Chlordioxid aufweist. In diese Testlösung wird bei 25°C eine Platte aus Stahl 1.4301 eingetaucht und der Gewichtsverlust der Platte nach 120 Stunden dient zur Berechnung der Korrosionsrate.

Das erfindungsgemäße Verfahren umfasst den Schritt des Vermischens bzw. der Zugabe einer Chlordioxid-haltigen wässrigen Lösung zu Prozesswasser. "Prozesswasser", wie hier verwendet, umfasst Wasser, welches in einem industriellen Prozess Anwendung findet und dazu dient Anlagen (industrielle Anlagen) zu betreiben, um den industriellen Prozess durchzuführen. Das im Zuge des industriellen Verfahrens hergestellte Endprodukt bzw. deren Zwischen- und Vorprodukte kommen im industriellen Prozess nicht direkt mit dem Prozesswasser in Berührung. Prozesswasser kann daher Wasser sein, welches beispielsweise zur Reinigung (z.B. "Cleaning-in-Place", CIP) von Anlagen und Maschinen verwendet wird. Auch Wasser, welches in Pasteurisierungsanlagen, Energiespeichertanks (z.B. zu Heizzwecken für Wärmeverbraucher) oder Kühltürmen verwendet wird, kann als Prozesswasser angesehen werden.

Die Chlordioxid-haltige wässrige Lösung wird in einer Menge zugegeben ist, die ausreichend ist, um das Redoxpotential des Prozesswassers zwischen 400 und 800 mV einzustellen. Die zugegebene Menge an der Chlordioxid-haltigen wässrigen Lösung kann daher variieren und ist einerseits abhängig von der in der wässrigen Lösung vorhandenen Chlordioxidkonzentration und andererseits vom pH-Wert der Lösung.

Besonders bevorzugt wird das erfindungsgemäße Verfahren eingesetzt, um die mikrobielle Belastung von Prozesswasser in einer Pasteurisierungsanlage, in einer Flaschenwaschanlage, in einer Wärmeanlage für Flaschen und/oder in einem Autoklav (Prozesswasser wird als Kühlmittel eingesetzt) zu kontrollieren. Die Verwendung einer Chlordioxid-haltigen wässrigen Lösung zur Behandlung von Prozesswasser von Pasteurisierungsanlagen ist dabei besonders vorteilhaft. Bei diesen Anlagen hat sich gezeigt, dass metallische Anlagenteile mit dem erfindungsgemäß behandelten Prozesswasser trotz Oxidationsmittel keine erhöhte Korrosion zeigen als nicht behandeltes Prozesswasser. Zudem zeigte sich überraschenderweise, dass Metallverpackungen, insbesondere Aluminiumverpackungen (z.B. Aluminiumdosen), durch die Zugabe von Chlordioxid-haltigen wässrigen Lösungen, um den beanspruchten Redoxpotentialbereich im Prozesswasser zu erreichen, keine Korrosionserscheinungen aufweisen. D.h. Metallverpackungen können besonders gut mit Prozesswasser in Kontakt gebracht werden (z.B. im Zuge eines Pasteurisierungsprozesses), welches mit dem erfindungsgemäßen Verfahren behandelt wird.

Daher ist es besonders bevorzugt das erfindungsgemäß behandelte Prozesswasser zur Reinigung, Pasteurisierung und/oder Sterilisation von Gebinden, vorzugsweise von Aluminiumgebinden wie Aluminiumdosen, zu verwenden.

Im erfindungsgemäßen Verfahren wird eine Chlordioxid-haltige wässrige Lösung dem Prozesswasser zugeführt bis das Redoxpotential im Prozesswasser 400 bis 800 mV beträgt. Insbesondere in diesem Potentialbereich hat sich gezeigt, dass das Wachstum von Zellen, insbesondere von Mikroorganismen besonders gut kontrolliert bzw. unterdrückt werden kann ohne die Korrosion von Metallen wie Stahl innerhalb einer industriellen Anlage zu fördern.

Die erfindungsgemäß eingesetzte Chlordioxid-haltige wässrige Lösung kann mit unterschiedlichsten Verfahren hergestellt werden. Besonders bevorzugt sind Verfahren, mit denen Chlordioxid-haltige wässrige Lösungen hergestellt werden können, die ein molares Chlordioxid zu Chloridionen Verhältnis von größer als 1 aufweisen. Erfindungsgemäß bevorzugte Verfahren sind zudem in der Lage, Chlordioxid-haltige wässrige Lösungen herzustellen, die einen pH-Wert von 4 bis 7,5 aufweisen. Beispielsweise kann Chlordioxid in wässriger Lösung durch Oxidation von Chlorit mit Peroxodisulfat oder Chlorgas als Oxidationsmittel hergestellt werden. Alternative Verfahren umfassen die Herstellung von Chlordioxid durch Disproportionierung von Natriumchlorit in saurer Lösung. Ein weiteres alternatives Verfahren ist die Umsetzung von Kaliumchlorat mittels konzentrierter Schwefelsäure, wobei die Explosionsgefahr bei dieser Methode besonders hoch ist. Da die Chloratbildung bei der Herstellung von Chlordioxid durch Oxidation von Chlorit (z.B. Natriumchlorit) mit Peroxodisulfat (z.B. Natriumperoxodisulfat) am geringsten ist, wird dieses Verfahren besonders bevorzugt, da es dadurch möglich ist, die Lösung, in der Chlordioxid hergestellt wird, direkt im erfindungsgemäßen Verfahren einzusetzen. Die unmittelbare Verwendung von Chlordioxid-haltigen Lösungen, die mit Natriumchlorit und Schwefelsäure oder einer sonstigen (starken) Säure hergestellt werden können, ist weniger bevorzugt, da diese korrosive Anionen und einen niedrigen korrosionsfördernden pH-Wert aufweisen. In einem solchen Fall müsste Chlordioxid mit Hilfe von aufwändigen Destillationsverfahren aus den Reaktionslösungen entfernt (z.B. mit Vakuum) und in wässrigen Lösungen mit einem pH-Wert von 4 bis 7,5 und einer geringen Menge an korrosionsfördernden Anionen, idealerweise in Chloridionen-freiem Wasser oder in Wasser mit geringer Chloridionenkonzentration (weniger als 150 ppm, vorzugsweise weniger als 100 ppm), eingebracht werden. Erfindungsgemäß werden somit Verfahren besonders bevorzugt verwendet, die die Herstellung einer Chlordioxid-haltigen wässrigen Lösung mit einem Chlordioxid zu Chloridionen Verhältnis von größer als 1 ermöglicht.

Gemäß einer bevorzugten Ausführungsform der vorliegenden Erfindung wird das Redoxpotential des Prozesswassers auf 400 bis 700 mV, vorzugsweise auf 400 bis 650 mV, noch mehr bevorzugt auf 400 bis 600mV, eingestellt wird.

Gemäß einer weiteren bevorzugten Ausführungsform der vorliegenden Erfindung beträgt die Konzentration des Chlordioxids im Prozesswasser 0,02 bis 0,9 ppm, vorzugsweise 0,05 bis 0,8 ppm, noch mehr bevorzugt 0,05 bis 0,5 ppm, noch mehr bevorzugt 0,1 bis 0,5 ppm.

Dem Prozesswasser wird die Chlordioxid-haltige wässrige Lösung zugesetzt, um vorzugsweise eine Konzentration von 0,02 bis 0,9 ppm Chlordioxid im Prozesswasser einzustellen. Dieser Konzentrationsbereich ist besonders vorteilhaft, da dieser überraschenderweise ausreichend ist, um das Redoxpotential im Prozesswasser in einem Bereich von 200 bis 800 mV einzustellen. Entgegen der Meinung in der Fachwelt, ist bereits eine derart geringe Konzentration an Chlordioxid ausreichend, um das Wachstum von Zellen, insbesondere von Mikroorganismen zu kontrollieren bzw. zu hemmen. Zudem wurde festgestellt, dass eine derartige Konzentration an Chlordioxid im Wesentlichen keinen negativen Einfluss auf die Korrosion von metallischen Anlagenteilen (z.B. aus Stahl, Edelstahl) hat. Bei höheren Konzentrationen an Chlordioxid könnte es durchaus zu Problemen in Hinblick auf Korrosion innerhalb einer Anlage kommen.

Der reduzierte Einsatz von Chlordioxid hat zudem auch einen ökonomischen Vorteil, da sich dadurch die Kosten an eingesetztem Oxidationsmittel reduzieren lassen ohne eine Einschränkung in der Wirksamkeit des Chlordioxids festzustellen.

Gemäß einer besonders bevorzugten Ausführungsform der vorliegenden Erfindung beträgt die Konzentration des Chlordioxids in der Chlordioxid-haltigen wässrigen Lösung 1.000 bis 40.000 ppm, vorzugsweise 2.000 bis 30.000 ppm, noch mehr bevorzugt 5.000 bis 20.000 ppm.

Gemäß einer bevorzugten Ausführungsform der vorliegenden Erfindung weist die Chlordioxid-haltige wässrige Lösung einen pH-Wert von 4,5 bis 7,5, vorzugsweise von 5 bis 7, auf.

Um Chlordioxid in einer wässrigen Lösung zu stabilisieren, ist es von Vorteil, den pH-Wert dieser Lösung im neutralen bis sauren Bereich einzustellen bzw. zu stabilisieren. Ein hoher pH-Wert kann nämlich zur Zersetzung des Chlordioxids führen, bei der sich beispielsweise explosives Chlorat bilden kann.

Das erfindungsgemäße Verfahren hat den Vorteil, dass trotz der exzellenten Kontrolle des Wachstums von Zellen, insbesondere von Mikroorganismen, das Prozesswasser im Wesentlichen keine bzw. sehr geringe korrosive Eigenschaften (z.B. gegenüber Metallen wie Stahl und Edelstahl) aufweist, da die Konzentration von Chlordioxid im Prozesswasser gering ist. Um die korrosiven Eigenschaften des mit Chlordioxid versetzten Prozesswassers weiter zu reduzieren, ist es von Vorteil, wenn die Chlordioxid-haltige wässrige Lösung nur geringe oder keine Mengen korrosionsfördernde Anionen (wie z.B. Chlorid) umfasst. Daher ist es besonders vorteilhaft, dass die Chlordioxid-haltige wässrige Lösung ein molares Chlordioxid zu Chloridionen Verhältnis von größer als 1 bzw. so wenig wie möglich korrosionsfördernde Anionen aufweist.

Um die Konzentration von korrosionsfördernden Anionen, insbesondere von Chloridionen und Sulfationen, in der Chlordioxid-haltigen wässrigen Lösung zu reduzieren, können Verfahren zur Herstellung von Chlordioxid bzw. Chlordioxid-haltigen wässrigen Lösungen verwendet werden, in denen besonders wenige dieser Anionen eingebracht werden. Beispielsweise können Verfahren zur Herstellung von Chlordioxid-haltigen wässrigen Lösungen verwendet werden, bei denen eine geringe Konzentration an korrosionsfördernden Anionen anfällt. Besonders bevorzugt wird daher Chlordioxid in wässriger Lösung durch Oxidation von Chlorit mit Peroxodisulfat hergestellt.

Gemäß einer weiteren bevorzugten Ausführungsform der vorliegenden Erfindung zeigt die Chlordioxid-haltige wässrige Lösung bei einer Chlordioxidkonzentration von 1000 ppm bei Raumtemperatur (20 bis 22°C) eine Korrosionsrate auf Stahl 1.4301 von weniger als 0,6 mm/Jahr, vorzugsweise von weniger als 0,55 mm/Jahr, noch mehr bevorzugt von weniger als 0,5 mm/Jahr.

Die Bestimmung der Korrosionsrate der Chlordioxid-haltige wässrige Lösung wird gemäß ASTM Standard G31-72 bestimmt.

Gemäß einer besonders bevorzugten Ausführungsform der vorliegenden Erfindung wird die Chlordioxid-haltige wässrige Lösung diskontinuierlich in das Prozesswasser eingebracht.

Chlordioxid kann dem Prozesswasser mittels einer Chlordioxid-haltigen wässrigen Lösung kontinuierlich oder diskontinuierlich zugeführt werden, um das Redoxpotential des Prozesswassers auf den gewünschten Bereich einzustellen. Bei der kontinuierlichen Zuführung von Chlordioxid bleibt das Redoxpotential im Prozesswasser relativ konstant, solange die Chlordioxid-haltige wässrige Lösung zudosiert wird. Bei der diskontinuierlichen Zuführung hingegen, wird Chlordioxid in zeitlichen Abständen dem Prozesswasser zugeführt, wodurch durch die über die Zeit abfallende Konzentration des Chlordioxids im Prozesswasser, auch das Redoxpotential im Prozesswasser Schwankungen ausgesetzt ist. Diese Schwankungen bleiben vorzugsweise jedoch im beanspruchten Bereich.

Gemäß einer bevorzugten Ausführungsform der vorliegenden Erfindung wird die Chlordioxid-haltige wässrige Lösung dem Prozesswasser zudosiert, wenn das Redoxpotential des Prozesswassers weniger als 500 mV, vorzugsweise weniger als 400 mV, noch mehr bevorzugt weniger als 300 mV, noch mehr bevorzugt weniger als 250 mV, beträgt.

Bei der diskontinuierlichen Zuführung von Chlordioxid zum Prozesswasser wird dieses vorzugsweise zu einem Zeitpunkt zugeführt, bei dem das Redoxpotential des Prozesswassers unter einen bestimmten Wert fällt. Dieser Wert befindet sich vorzugsweise innerhalb jenen Bereichs, der erfindungsgemäß notwendig ist, um das Wachstum von Zellen, insbesondere von Mikroorganismen, zu kontrollieren.

Gemäß einer besonders bevorzugten Ausführungsform der vorliegenden Erfindung wird die Chlordioxid-haltige wässrige Lösung dem Prozesswasser mindestens so lange zudosiert, bis das Redoxpotential im Prozesswasser 800 mV, vorzugsweise 700 mV, noch mehr bevorzugt 650 mV, beträgt.

Bei der diskontinuierlichen Zuführung von Chlordioxid zum Prozesswasser wird dieses so lange zudosiert, bis das Redoxpotential des Prozesswassers einen bestimmten Wert erreicht. Nach Erreichen des vordefinierten Schwellenwerts wird die Zudosierung von Chlordioxid zum Prozesswasser unterbrochen.

Gemäß einer weiteren bevorzugten Ausführungsform der vorliegenden Erfindung wird bei einer diskontinuierlichen Vermischung der Chlordioxid-haltigen wässrigen Lösung mit dem Prozesswasser die Chlordioxid-haltige wässrige Lösung für 30 min bis 3 Stunden mit einer Unterbrechung von 30 min bis 3 Stunden dem Prozesswasser zudosiert.

Die Zudosierung von Chlordioxid kann bis zum Erreichen eines vordefinierten Wertes für einen bestimmten Zeitraum erfolgen.

Gemäß einer bevorzugten Ausführungsform der vorliegenden Erfindung weist das Prozesswasser bei Zugabe oder Anwesenheit der Chlordioxid-haltigen wässrigen Lösung eine Temperatur von weniger als 50°C, vorzugsweise von weniger als 45°C, auf.

Die Chlordioxid-haltige wässrige Lösung wird dem Prozesswasser vorzugsweise bei einer bestimmten Maximaltemperatur zugeführt, um ein etwaiges Austreiben des Chlordioxids aus der wässrigen Lösung bzw. dem Prozesswasser zu reduzieren bzw. zu verhindern. Es hat sich gezeigt, dass die Zugabe zu Prozesswasser mit 50°C oder weniger, im Wesentlichen zu keinem Austreiben von Chlordioxid aus dem Prozesswasser führt. In industriellen Prozessen bzw. Anlagen, bei denen das Prozesswasser Temperaturschwankungen ausgesetzt wird (z.B. Pasteurisierungsanlagen) ist es von Vorteil, die Chlordioxid-haltige wässrige Lösung zu einem Zeitpunkt dem Prozesswasser zuzuführen, bei dem die Temperatur des Prozesswassers konstant bleibt oder das Prozesswasser sich in einer Abkühlphase befindet. Einerseits können Temperaturen von unter 40°C das Wachstum von Mikroorganismen fördern, andererseits treibt Chlordioxid bei Temperaturen von unter 50°C weniger aus.

Gemäß einer besonders bevorzugten Ausführungsform der vorliegenden Erfindung weist das Prozesswasser vor und/oder nach Zugabe der Chlordioxid-haltigen wässrigen Lösung einen pH-Wert von 4 bis 8, vorzugsweise von 4,5 bis 7,5, noch mehr bevorzugt von 5 bis 7, noch mehr bevorzugt von 5,5 bis 6,5, auf.

Es hat sich gezeigt, dass die oxidative Wirkung des Chlordioxids im Prozesswasser besonders hoch ist, wenn das Prozesswasser einen bestimmten pH-Wert im sauren Bereich aufweist. Der pH-Wert des Prozesswassers liegt im erfindungsgemäßen Bereich entweder vor oder zumindest nach der Zugabe der Chlordioxid-haltigen wässrigen Lösung.

Gemäß einer weiteren bevorzugten Ausführungsform der vorliegenden Erfindung wird das Prozesswasser an einer oder mehreren Stellen der industriellen Anlage gefiltert, vorzugsweise mit einem Membranfilter.

Prozesswasser wird während dessen Verwendung in industriellen Anlagen mit Partikeln unterschiedlichster Größe und Beschaffenheit und mit Mikroorganismen verunreinigt. Um die Anzahl der Partikel zu reduzieren, kann das Prozesswasser im erfindungsgemäßen Verfahren gefiltert werden. Im Zuge der Filtration können je nach Porengröße der verwendeten Filter auch Mikroorganismen aus dem Prozesswasser entfernt werden. Besonders bevorzugt werden Membranfilter eingesetzt, um partikuläre und mikrobielle Verunreinigungen aus dem Prozesswasser zu entfernen.

Die Porengröße der Membranfilter beträgt vorzugsweise weniger als 10 µm, noch mehr bevorzugt weniger als 5 µm, noch mehr bevorzugt weniger als 2 µm, noch mehr bevorzugt weniger als 1 µm, noch mehr bevorzugt weniger als 0,8 µm, noch mehr bevorzugt weniger als 0,5 µm, noch mehr bevorzugt weniger als 0,2 µm.

Die Membranfilter können unterschiedlichste Materialien umfassen, die u.a. nach dem zu filternden Prozesswasser ausgewählt werden. Es sollte nämlich auf der einen Seite sichergestellt sein, dass das Membranmaterial resistent gegenüber den Inhaltsstoffen des zu filternden Prozesswassers ist, damit die Qualität der Membrane des Membranfilters nicht beeinträchtigt wird, und auf der anderen Seite sollten jene Partikel und Mikroorganismen abtrennbar sein, die aus dem Prozesswasser entfernt werden sollten.

Die Membrane der erfindungsgemäß eingesetzten Filter können keramische Materialien und/oder Polymere umfassen. Bevorzugte Polymere umfassen wie Polysulfone und Polyvinylchlorid (PVC).

Je nach Führung des Prozesswassers in einer industriellen Anlage und je nach Verfahren kann das Prozesswasser an einer oder mehreren Stellen der industriellen Anlage filtriert werden. Die Filtration kann dabei entweder vor oder nach Zugabe der Chlordioxid-haltigen wässrigen Lösung zum Prozesswasser erfolgen.

Gemäß einer bevorzugten Ausführungsform der vorliegenden Erfindung wird das Prozesswasser über ein Sammelbecken geführt und das Vermischen des Prozesswassers mit der Chlordioxid-haltigen wässrigen Lösung erfolgt vorzugsweise im Sammelbecken.

Die Chlordioxid-haltige wässrige Lösung kann dem Prozesswasser an unterschiedlichen Stellen und auf unterschiedlicher Art und Weise zudosiert werden. D.h. die Chlordioxid-haltige Lösung kann dem Prozesswasser in Leitungen oder in sonstigen Behältnissen einer industriellen Anlage beigefügt werden. Besonders bevorzugt ist die Zugabe der Chlordioxid-haltigen Lösung zum Prozesswasser in einem Sammelbecken, das vorzugsweise mit einem Rührwerk versehen ist. Dadurch kann eine homogene Vermischung des Chlordioxids im Prozesswasser sichergestellt werden.

Gemäß einer bevorzugten Ausführungsform der vorliegenden Erfindung wird die Chlordioxid-haltige wässrige Lösung mittels eines Persulfat-Chlorit-Verfahrens hergestellt.

Bei Persulfat-Chlorit-Verfahren zur Erzeugung von Chlordioxid wird ein Chlorit-Ion mittels des Persulfat-Ions zu Chlordioxid umgesetzt.

2 ClO₂⁻ + S₂O₈²⁻ → 2 ClO₂ + 2 SO₄²⁻

Derartige Verfahren haben den Vorteil, dass die Konzentration an entstehenden Chloridionen gering ist, so dass im Zuge der Reaktion Chlordioxid in einer meist höheren molaren Menge produziert wird als Chloridionen.

Verfahren zur Herstellung von Chlordioxid-haltigen wässrigen Lösungen sind dem Fachmann hinreichend bekannt und entsprechenden Fachbüchern zu entnehmen. Beispielsweise werden in der US 6,468,479 und in der EP 2 654 940 geeignete Verfahren beschrieben.

Gemäß einer weiteren bevorzugten Ausführungsform der vorliegenden Erfindung wird die Chlordioxid-haltige wässrige Lösung nach dessen Herstellung direkt in das Prozesswasser eingebracht.

Es ist ein großer Vorteil der vorliegenden Erfindung, dass die Reaktionslösung, in der Chlordioxid hergestellt wird, unmittelbar in das Prozesswasser eingebracht werden kann. Es ist nicht nötig Chlordioxid aus dem Reaktionsgemisch zu entfernen und anschließend wieder in Wasser zu lösen. Dadurch wird der gesamte Prozess nicht nur wirtschaftlicher, sondern auch viel sicherer, da gasförmiges Chlordioxid hochexplosiv ist.

Die Reaktionslösung des Persulfat-Chlorit-Verfahrens kann somit direkt als Chlordioxidhaltige wässrige Lösung in das Prozesswasser eingebracht werden.

Gemäß einer besonders bevorzugten Ausführungsform der vorliegenden Erfindung umfasst die Chlordioxid-haltige Lösung mindestens ein weiteres Oxidationsmittel.

Neben Chlordioxid kann dem Prozesswasser mindestens ein weiteres Oxidationsmittel zugesetzt werden. Die Zugabe eines weiteren Oxidationsmittels hat den Vorteil, dass die einzusetzende Menge an Chlordioxid reduziert werden kann, um den gewünschten Effekt zu erzielen. Andererseits kann das mindestens eine weitere Oxidationsmittel auch ein bei der Herstellung der Chlordioxid-haltigen Lösung verwendetes Oxidationsmittel sein.

Gemäß einer bevorzugten Ausführungsform der vorliegenden Erfindung ist das mindestens eine weitere Oxidationsmittel Peroxodisulfat.

Gemäß einer weiteren bevorzugten Ausführungsform der vorliegenden Erfindung umfasst die Chlordioxid-haltige Lösung nicht abreagiertes Peroxodisulfat.

### BEISPIELE

### Beispiel 1: Einfluss von Chlordioxid auf die mikrobielle Qualität von Prozesswasser

Um den Einfluss von Chlordioxid auf die mikrobielle Qualität von Prozesswasser zu untersuchen, wurde das Prozesswasser einer ersten Pasteurisierungsanlage mit der erfindungsgemäßen Chlordioxid-haltigen wässrigen Lösung versetzt, das Prozesswasser einer zweiten Pasteurisierungsanlage mit einem Biozid.

In das Prozesswasser der ersten Pasteurisierungsanlage wurde die erfindungsgemäße Chlordioxid-haltige wässrige Lösung (hergestellt mit dem Persulfat-Chlorit-Verfahren) in einer Menge diskontinuierlich zudosiert, um das Redoxpotential des Prozesswassers im Bereich von 400 bis 800 mV zu halten. Fiel das Redoxpotential im Prozesswasser unter 400 bis 450 mV wurde die erfindungsgemäße Chlordioxid-haltige wässrige Lösung bis zum Erreichen eines Redoxpotentials zwischen 750 und 800 mV zudosiert.

Im Gegensatz dazu wurde in das Prozesswasser der zweiten Pasteurisierungsanlage zeitgesteuert (alle drei Tage) Bronopol in einer Menge zugegeben, dass die Konzentration von Bronopol im Prozesswasser 0,3 bis 3 mg/ml betrug.

Die mikrobielle Belastung im Prozesswasser beider Pasteurisierungsanlagen wurde über einen Zeitraum von 4 Monaten beobachtet, wobei zwei Mal pro Woche (Montag und Donnerstag) der mikrobielle Status des Prozesswassers überprüft wurde.

Die Keimzahl in 1 ml Probe wurde mit "Plate Count Agar" (PCA) bestimmt, wobei die entsprechende Menge an Prozesswasser auf PCA-Platten aufgebracht wurde. Jeweils eine Platte wurde bei 37°C und jeweils eine Platte bei 28°C inkubiert. Die Keimzahlauswertung erfolgte nach 2 bzw. 5 Tagen.

| **Datum** | **Prozesswasser mit Bronopol behandelt** | **Prozesswasser mit Chlordioxid behandelt** |
|---|---|---|
| | **Keimzahl/ml Prozesswasser** | **Keimzahl/ml Prozesswasser** |
| 04.01.2021 | 3600 | 280 |
| 07.01.2021 | 4200 | 3840 |
| 11.01.2021 | 3400 | 3480 |
| 14.01.2021 | >10000 | 3120 |
| 18.01.2021 | >10000 | 4160 |
| 21.01.2021 | 60200 | 2100 |
| 25.01.2021 | >10000 | 4800 |
| 28.01.2021 | 54400 | 500 |
| 02.02.2021 | 81600 | 7040 |
| 04.02.2021 | >10000 | 800 |
| 08.02.2021 | >10000 | 80 |
| 11.02.2021 | >10000 | 100 |
| 17.02.2021 | 76000 | 200 |
| 18.02.2021 | >10000 | 1120 |
| 22.02.2021 | >10000 | 1740 |
| 26.02.2021 | 51000 | 2340 |
| 01.03.2021 | >10000 | 940 |
| 12.03.2021 | >10000 | 9200 |
| 15.03.2021 | >10000 | 100 |
| 18.03.2021 | >10000 | 60 |
| 22.03.2021 | >10000 | 8000 |
| 25.03.2021 | >10000 | 10000 |
| 29.03.2021 | >10000 | 10000 |
| 05.04.2021 | >10000 | 160 |
| 08.04.2021 | >10000 | 2800 |
| 12.04.2021 | >10000 | 6560 |
| 15.04.2021 | >10000 | 700 |
| 19.04.2021 | >10000 | 140 |
| 23.04.2021 | >10000 | 2020 |
| 26.04.2021 | >10000 | 4500 |
| 29.04.2021 | >10000 | 3700 |

Parallel dazu wurde das Redoxpotential jener Pasteurisierungsanlage gemessen, in die Chlordioxid in das Prozesswasser zudosiert wurde und zwar zum Zeitpunkt der Probenahme für die Keimzahlbestimmung.

| **Datum** | **Redoxpotential im Prozesswasser [mV]** |
|---|---|
| 04.01.2021 | 810 |
| 07.01.2021 | 740 |
| 11.01.2021 | 710 |
| 14.01.2021 | 700 |
| 18.01.2021 | 620 |
| 21.01.2021 | 540 |
| 25.01.2021 | 420 |
| 28.01.2021 | 790 |
| 02.02.2021 | 710 |
| 04.02.2021 | 550 |
| 08.02.2021 | 800 |
| 11.02.2021 | 750 |
| 17.02.2021 | 780 |
| 18.02.2021 | 740 |
| 22.02.2021 | 510 |
| 26.02.2021 | 640 |
| 01.03.2021 | 720 |
| 12.03.2021 | 580 |
| 15.03.2021 | 760 |
| 18.03.2021 | 780 |
| 22.03.2021 | 660 |
| 25.03.2021 | 490 |
| 29.03.2021 | 430 |
| 05.04.2021 | 770 |
| 08.04.2021 | 640 |
| 12.04.2021 | 450 |
| 15.04.2021 | 800 |
| 19.04.2021 | 780 |
| 23.04.2021 | 560 |
| 26.04.2021 | 630 |
| 29.04.2021 | 680 |

Das Redoxpotential des Prozesswassers, welches mit Bronopol behandelt wurde, belief sich bei 5 Messungen innerhalb des Untersuchungszeitraums stets auf über 1000 mV.

Die beobachteten Keimzahlen belegen, dass die Verwendung von Chlordioxid in einer Menge, die ausreicht um das Redoxpotential des Prozesswassers im Bereich von 400 bis 800 mV zu halten, zu einer geringeren Keimzahl führt also die Verwendung von herkömmlichen Bioziden wie Bronopol.

### Beispiel 2: Korrosionsbeständigkeit von Edelstahl in Anwesenheit von Chlordioxid

Um die Korrosionsbeständigkeit von Edelstahl in Anwesenheit der erfindungsgemäßen Chlordioxid-haltigen wässrigen Lösung zu überprüfen, wurden mit verschiedenen Verfahren hergestellte Chlordioxid-haltige wässrige Lösungen untersucht. Chlordioxid-haltige wässrige Lösungen wurden mit dem Peroxodisulfat-Chlorit-Verfahren, dem Salzsäure-Chlorit-Verfahren und dem Schwefelsäure-Chlorit-Verfahren hergestellt, wobei Reinstwasser zum Lösen der Salze bzw. zum Verdünnen der Säuren eingesetzt wurden. Zudem wurde eine Chlordioxid-haltige wässrige Lösung durch Einbringen von Chlordioxidgas in Reinstwasser hergestellt.

Der Gehalt an Chlordioxid in den mit den genannten Verfahren hergestellten Chlordioxid-haltigen Lösungen wurde mittels DPD (Dipropyl-p-phenylendiamin; Palin-Test) bestimmt. Anschließend wurden aus den oben genannten Chlordioxid-haltigen Lösungen und destillierten Wasser bzw. Prozesswasser Versuchslösungen mit einem Chlordioxid-Gehalt von 1000 ppm und 50 ppm hergestellt.

Prüfkörper mit den Abmessungen 9 mm x 39 mm und 1 mm Dicke wurden aus Chrom-Nickel-Edelstahl der Qualität 1.4301 hergestellt. Alle Prüfkörper wiesen eine Bohrung mit einem Durchmesser von ca. 5 mm auf um diese mittels eines Glashakens in die Versuchslösungen tauchen zu können.

Die Prüfkörper wurden schließlich vollständig in die hergestellten Versuchslösungen umfassend Chlordioxid eingetaucht und für 120 h bei 20°C in einem Dreihalskolben mit Rückflusskühler gerührt. Alle 12 bis 14 h wurde der Chlordioxidgehalt der eingesetzten Versuchslösungen kontrolliert und gegebenenfalls durch Zugabe weiterer spezifisch hergestellter Versuchslösung auf die ursprünglichen Ausgangskonzentrationen von Chlordioxid (1000 ppm und 50 ppm) eingestellt.

Die Versuchsdurchführung und Berechnung erfolgte nach den Grundsätzen der ASTM G-31-72 ("Standard Practice for Laboratory Immersion Corrosion Testing of Metals").

Die pH-Werte der Chlordioxid-haltigen wässrigen Lösungen und die pH-Werte der Prüflösungen sind in der folgenden Tabelle dargestellt.

| **Chlordioxid-quelle** | Chlordioxid-haltige wässrige Lösung, pH-Wert | Prüflösung 50 ppm ClO₂, pH-Wert | Prüflösung 1000 ppm ClO₂, pH-Wert |
|---|---|---|---|
| Salzsäureverfahren | 2,5 | 3,1 | 2,9 |
| Schwefelsäuresäureverfahren | 1,7 | 2,3 | 2,1 |
| Persulfatverfahren | 6,2 | 6,4 | 6,3 |
| ClO₂ in dest. Wasser | 6,8 | 6,8 | 6,7 |

### Ergebnisse

In der folgenden Tabelle sind die Massenverluste der Prüfkörper nach 120 h aufgelistet.

| **Chlordioxidquelle Konzentration ClO₂** | **Prüfkörper** | | | |
|---|---|---|---|---|
| | **Gewicht [g], 0 h** | **Gewicht [g], 120 h** | **Gewichtsdifferenz [mg]** | **Gewichtsdifferenz (%)** |
| **Salzsäureverfahren 50ppm** | 15,0313 | 14,9534 | 77,9000 | 0,0052 |
| **Salzsäureverfahren 1000ppm** | 15,4513 | 15,3147 | 136,6000 | 0,0088 |
| **Schwefelsäure 50ppm** | 15,2262 | 15,1237 | 102,5000 | 0,0067 |
| **Schwefelsäure 1000ppm** | 15,4105 | 15,2796 | 130,9000 | 0,0085 |
| **Persulfat 50ppm** | 15,2765 | 15,2554 | 21,1000 | 0,0014 |
| **Persulfat 1000ppm** | 15,3354 | 15,3005 | 34,9000 | 0,0023 |
| **ClO₂ in dest. Wasser 50ppm** | 15,3125 | 15,2988 | 13,7000 | 0,0009 |
| **ClO₂ in dest. Wasser 1000ppm** | 15,1827 | 15,1507 | 32,0000 | 0,0021 |

Aus den ermittelten Daten lässt sich der Verlust pro Jahr errechnen. Der Verlust an Stahl pro Jahr, ausgedrückt als mm/y, ist in der folgenden Tabelle dargestellt.

| **Herstellungsverfahren, Konzentration ClO₂ 50ppm** | **Verlust mm/y** |
|---|---|
| Salzsäureverfahren | 0,378860759 |
| Schwefelsäureverfahren | 0,498500999 |
| Persulfatverfahren | 0,102618254 |
| ClO₂ in dest. Wasser | 0,066628914 |
| | |

| **Herstellungsverfahren, Konzentration ClO₂ 1000ppm** | **Verlust mm/y** |
|---|---|
| Salzsäureverfahren | 0,664343771 |
| Schwefelsäureverfahren | 0,636622252 |
| Persulfatverfahren | 0,169733511 |
| ClO₂ in dest. Wasser | 0,15562958 |

Die Ergebnisse zeigen, dass die Verwendung von Chlordioxid-haltigen wässrigen Lösungen, die mittels Salzsäureverfahren hergestellt wurden, zu einer erhöhten Korrosion von Edelstahl führen. Diese Beobachtung ist auf die erhöhte Chloridionenkonzentration in der wässrigen Lösung und auf den niedrigen pH-Wert der Lösung zurückzuführen, die bei dem entsprechen Herstellverfahren erzeugt werden. Um die Konzentration von Chloridionen und somit die Korrosivität derartiger Chlordioxid-haltigen Lösungen zu reduzieren, wurde ein alternatives Verfahren zur Herstellung von Chlordioxidionen eingesetzt. Beim Schwefelsäureverfahren fällt im Vergleich zum Salzsäureverfahren eine weitaus geringere Menge an Chloridionen an. Nichtsdestotrotz zeigten auch Chlordioxid-haltige wässrige Lösungen, die mit einem Schwefelsäureverfahren hergestellt wurden, eine erhöhte Korrosivität auf. Dies ist auf den geringen pH-Wert der entsprechenden Chlordioxid-haltigen wässrigen Lösung zurückzuführen. Überraschenderweise konnten mit einer Chlordioxid-haltigen wässrigen Lösung, welche mit dem Persulfatverfahren hergestellt wurde, die besten Ergebnisse hinsichtlich Korrosivität erzielt werden. Diese Ergebnisse sind dahingehend überraschend, da bei einer Konzentration von 1000 ppm die Korrosivität vergleichbar mit einer Versuchslösung ist, in der Chlordioxidgas direkt gelöst wurde.

Es wurde zudem überraschender Weise gefunden, dass mit der erfindungsgemäßen Chlordioxid-haltigen Lösung versetztes destillierte Wasser im Wesentlichen dieselben korrosiven Eigenschaften aufweist wie Prozesswasser umfassend 80 ppm Chloridionen, welches mit derselben Menge an Chlordioxid-haltiger Lösung versetzt wurde. Dieses Ergebnis ist insbesondere deshalb überraschend, da durch das Vorhandensein von Chloridionen im Prozesswasser, die absolute Menge an Chloridionen höher war als im destillierten Wasser. Dies zeigt, dass es auf das molare Verhältnis von Chlordioxid zu Chloridionen in der erfindungsgemäßen Chlordioxid-haltigen wässrigen Lösung und auf dessen pH-Wert ankommt. Vor allem der pH-Wert des Prozesswassers ist durch die Chlordioxid-haltige Lösung in einfacher Weise beeinflussbar.

### Beispiel 3: Einfluss des molaren Verhältnisses zwischen Chlordioxid zu Chloridionen in der Chlordioxid-haltigen wässrigen Lösung auf dessen Korrosivität

Die Korrosivität erfindungsgemäßen Chlordioxid-haltigen wässrigen Lösung hängt vom molaren Verhältnis von Chlordioxid zu Chloridionen in der Lösung ab. Um dies zu zeigen, wurde die erfindungsgemäße Chlordioxid-haltige wässrige Lösung (hergestellt wie in Beispiel 1 beschrieben), deren molares Chlordioxid zu Chloridionen Verhältnis mehr als 1 beträgt, mit Natriumchlorid versetzt, um die Menge an Chloridionen in der Lösung zu erhöhen. Anschließend wurden die Korrosionsbeständigkeitsversuche mit 1000 ppm Chlordioxid in der Versuchslösung, wie in Beispiel 2 beschrieben, durchgeführt. Dabei wurden folgende Ergebnisse erzielt:

| **Versuchslösung** | **Molares Verhältnis Chlordioxid:Chloridionen** | **Verlust mm/y** |
|---|---|---|
| 1 | >1 | 0,1587955 |
| 2 | ca. 1:2 | 0,6125843 |
| 3 | ca. 1:5 | 0,6872435 |
| 4 | ca. 1:10 | 0,8532145 |

Es hat sich überraschend gezeigt, dass bei einem molaren Überschuss von Chloridionen gegenüber gelösten Chlordioxid die Korrosionsraten gegenüber Edelstahl signifikant erhöht sind.

## Patentansprüche

1. Verfahren zur Kontrolle des Wachstums von Mikroorganismen in zumindest teilweise zirkulierendem Prozesswasser einer industriellen Anlage, umfassend den Schritt des Einbringens einer Chlordioxid-haltigen wässrigen Lösung in das Prozesswasser, um im Prozesswasser ein Redoxpotential von 400 bis 800 mV einzustellen, wobei die Chlordioxid-haltige wässrige Lösung einen pH-Wert von 4 bis 7,5 und ein Chlordioxid zu Chloridionen Verhältnis von größer als 1 aufweist, wobei das Prozesswasser eine Temperatur von 5 bis 50°C aufweist.

2. Verfahren gemäß Anspruch 1, **dadurch gekennzeichnet, dass** das Redoxpotential des Prozesswassers durch das Einbringen der Chlordioxid-haltigen wässrigen Lösung auf 400 bis 700 mV, vorzugsweise auf 400 bis 650 mV, noch mehr bevorzugt auf 400 bis 600mV, eingestellt wird.

3. Verfahren nach einem der Ansprüche 1 oder 2, **dadurch gekennzeichnet, dass** die Konzentration des Chlordioxids im Prozesswasser nach dem Einbringen der Chlordioxid-haltigen wässrigen Lösung 0,02 bis 0,9 ppm, vorzugsweise 0,05 bis 0,8 ppm, noch mehr bevorzugt 0,05 bis 0,5 ppm, noch mehr bevorzugt 0,1 bis 0,5 ppm, beträgt.

4. Verfahren nach einem der Ansprüche 1 bis 3, **dadurch gekennzeichnet, dass** die Konzentration des Chlordioxids in der Chlordioxid-haltigen wässrigen Lösung 1.000 bis 40.000 ppm, vorzugsweise 2.000 bis 30.000 ppm, noch mehr bevorzugt 5.000 bis 20.000 ppm, beträgt.

5. Verfahren nach einem der Ansprüche 1 bis 4, **dadurch gekennzeichnet, dass** die Chlordioxid-haltige wässrige Lösung diskontinuierlich in das Prozesswasser eingebracht wird.

6. Verfahren gemäß Anspruch 5, **dadurch gekennzeichnet, dass** die Chlordioxid-haltige wässrige Lösung in das Prozesswasser eingebracht wird, wenn das Redoxpotential des Prozesswassers weniger als 500 mV, vorzugsweise weniger als 450 mV, noch mehr bevorzugt weniger als 420 mV, beträgt.

7. Verfahren gemäß Anspruch 5 oder 6, **dadurch gekennzeichnet, dass** die Chlordioxid-haltige wässrige Lösung in das Prozesswasser mindestens so lange eingebracht wird, bis das Redoxpotential im Prozesswasser 800 mV, vorzugsweise 700 mV, noch mehr bevorzugt 650 mV, beträgt.

8. Verfahren nach einem der Ansprüche 5 bis 7, **dadurch gekennzeichnet, dass** bei einer diskontinuierlichen Einbringung der Chlordioxid-haltigen wässrigen Lösung in das Prozesswasser die Chlordioxid-haltige wässrige Lösung für 30 min bis 5 Stunden, vorzugsweise für 1 bis 3 Stunden, mit einer Unterbrechung von 30 min bis 5 Stunden, vorzugsweise für 3 bis 5 Stunden, in das Prozesswasser eingebracht wird.

9. Verfahren nach einem der Ansprüche 1 bis 8, **dadurch gekennzeichnet, dass** die Chlordioxid-haltige wässrige Lösung in das Prozesswasser für 30 min bis 5 Stunden, vorzugsweise für 1 bis 3 Stunden, eingebracht wird, um das Redoxpotential im Prozesswasser zwischen 600 und 800 mV, vorzugsweise zwischen 600 und 700 mV, noch mehr bevorzugt zwischen 600 und 650 mV, einzustellen.

10. Verfahren nach einem der Ansprüche 1 bis 9, **dadurch gekennzeichnet, dass** das Prozesswasser vor und/oder nach der Einbringung der Chlordioxid-haltigen wässrigen Lösung in das Prozesswasser eine Temperatur von weniger als 50°C, vorzugsweise von weniger als 45°C, aufweist.

11. Verfahren nach einem der Ansprüche 1 bis 10, **dadurch gekennzeichnet, dass** das Prozesswasser an einer oder mehreren Stellen der industriellen Anlage, vorzugsweise mit einem Membranfilter, gefiltert wird.

12. Verfahren nach einem der Ansprüche 1 bis 11, **dadurch gekennzeichnet, dass** das Prozesswasser über ein Sammelbecken geführt wird und das Einbringen der Chlordioxid-haltigen wässrigen Lösung in das Prozesswasser vorzugsweise im Sammelbecken erfolgt.

13. Verfahren nach einem der Ansprüche 1 bis 12, **dadurch gekennzeichnet, dass** die Chlordioxid-haltige wässrige Lösung mittels eines Persulfat-Chlorit-Verfahrens hergestellt wird.

14. Verfahren nach einem der Ansprüche 1 bis 13, **dadurch gekennzeichnet, dass** die Chlordioxid-haltige wässrige Lösung nach dessen Herstellung direkt in das Prozesswasser eingebracht wird.

## Claims

1. A process for controlling the growth of microorganisms in at least partially circulating process water of an industrial plant, comprising the step of introducing an aqueous solution containing chlorine dioxide into the process water in order to set a redox potential of 400 to 800 mV in the process water, wherein the aqueous solution containing chlorine dioxide having a pH value of 4 to 7.5 and a ratio of chlorine dioxide to chloride ions of greater than 1, wherein the process water having a temperature of 5 to 50°C.

2. The process according to claim 1, **characterized in that**, as a result of the introduction of the aqueous solution containing chlorine dioxide, the redox potential of the process water is set to 400 to 700 mV, preferably to 400 to 650 mV, more preferably to 400 to 600 mV.

3. The process according to any of claims 1 or 2, **characterized in that**, after the introduction of the aqueous solution containing chlorine dioxide, the concentration of chlorine dioxide in the process water ranges from 0.02 to 0.9 ppm, preferably from 0.05 to 0.8 ppm, more preferably from 0.05 to 0.5 ppm, more preferably from 0.1 to 0.5 ppm.

4. The process according to any of claims 1 to 3, **characterized in that** the concentration of chlorine dioxide in the aqueous solution containing chlorine dioxide ranges from 1,000 to 40,000 ppm, preferably from 2,000 to 30,000 ppm, more preferably from 5,000 to 20,000 ppm.

5. The process according to any of claims 1 to 4, **characterized in that** the aqueous solution containing chlorine dioxide is introduced discontinuously into the process water.

6. The process according to claim 5, **characterized in that** the aqueous solution containing chlorine dioxide is introduced into the process water when the redox potential of the process water is less than 500 mV, preferably less than 450 mV, more preferably less than 420 mV.

7. The process according to claim 5 or 6, **characterized in that** the aqueous solution containing chlorine dioxide is introduced into the process water at least until the redox potential in the process water is 800 mV, preferably 700 mV, more preferably 650 mV.

8. The process according to any of claims 5 to 7, **characterized in that**, when the aqueous solution containing chlorine dioxide is introduced discontinuously into the process water, the aqueous solution containing chlorine dioxide is introduced into the process water for 30 minutes to 5 hours, preferably for 1 to 3 hours, with an interruption of 30 minutes to 5 hours, preferably for 3 to 5 hours.

9. The process according to any of claims 1 to 8, **characterized in that** the aqueous solution containing chlorine dioxide is introduced into the process water for 30 minutes to 5 hours, preferably for 1 to 3 hours, to set the redox potential in the process water to between 600 and 800 mV, preferably between 600 and 700 mV, more preferably between 600 and 650 mV.

10. The process according to any of claims 1 to 9, **characterized in that**, before and/or after the introduction of the aqueous solution containing chlorine dioxide into the process water, the process water has a temperature of less than 50°C, preferably of less than 45°C.

11. The process according to any of claims 1 to 10, **characterized in that** the process water is filtered at one or several points in the industrial plant, preferably with a membrane filter.

12. The process according to any of claims 1 to 11, **characterized in that** the process water is guided over a collecting basin and the introduction of the aqueous solution containing chlorine dioxide into the process water occurs preferably in the collecting basin.

13. The process according to any of claims 1 to 12, **characterized in that** the aqueous solution containing chlorine dioxide is produced by means of a persulfate-chlorite process.

14. The process according to any of claims 1 to 13, **characterized in that** the aqueous solution containing chlorine dioxide is introduced directly into the process water after its production.

## Revendications

1. Procédé pour contrôler la croissance de microorganismes dans l'eau de traitement au moins partiellement en circulation d'une installation industrielle, comprenant l'étape d'injection d'une solution aqueuse contenant du dioxyde de chlore dans l'eau de traitement pour obtenir un potentiel rédox de 400 à 800 mV dans l'eau de traitement, la solution aqueuse contenant du dioxyde de chlore présentant une valeur pH de 4 à 7,5 et un rapport dioxyde de chlore sur ions chlorure supérieur à 1, et l'eau de traitement présentant une température de 5 à 50 °C.

2. Procédé selon la revendication 1, **caractérisé en ce que** le potentiel rédox de l'eau de traitement est réglé sur 400 à 700 mV, de préférence sur 400 à 650 mV et encore plus préférablement sur 400 à 600 mV par l'injection de la solution aqueuse contenant du dioxyde de chlore.

3. Procédé selon une des revendications 1 ou 2, **caractérisé en ce que** la concentration du dioxyde de chlore dans l'eau de traitement après l'injection de la solution aqueuse contenant du dioxyde de chlore est de 0,02 à 0,9 ppm, de préférence de 0,05 à 0,8 ppm, encore plus préférablement de 0,05 à 0,5 ppm et encore plus préférablement de 0,1 à 0,5 ppm.

4. Procédé selon une des revendications 1 à 3, **caractérisé en ce que** la concentration du dioxyde de chlore dans la solution aqueuse contenant du dioxyde de chlore est de 1000 à 40000 ppm, de préférence de 2000 à 30000 ppm et encore plus préférablement de 5000 à 20000 ppm.

5. Procédé selon une des revendications 1 à 4, **caractérisé en ce que** la solution aqueuse contenant du dioxyde de chlore est injectée de façon discontinue dans l'eau de traitement.

6. Procédé selon la revendication 5, **caractérisé en ce que** la solution aqueuse contenant du dioxyde de chlore est injectée dans l'eau de traitement quand le potentiel rédox de l'eau de traitement est inférieur à 500 mV, de préférence inférieur à 450 mV et encore plus préférablement inférieur à 420 mV.

7. Procédé selon la revendication 5 ou 6, **caractérisé en ce que** la solution aqueuse contenant du dioxyde de chlore est injectée dans l'eau de traitement au moins jusqu'à ce que le potentiel rédox dans l'eau de traitement soit de 800 mV, de préférence de 700 mV et encore plus préférablement de 650 mV.

8. Procédé selon une des revendications 5 à 7, **caractérisé en ce que**, lors d'une injection discontinue de la solution aqueuse contenant du dioxyde de chlore dans l'eau de traitement, la solution aqueuse contenant du dioxyde de chlore est injectée dans l'eau de traitement pendant 30 minutes à 5 heures, de préférence pendant 1 à 3 heures, avec une interruption de 30 minutes à 5 heures , et de préférence pendant 3 à 5 heures.

9. Procédé selon une des revendications 1 à 8, **caractérisé en ce que** la solution aqueuse contenant du dioxyde de chlore est injectée dans l'eau de traitement pendant 30 minutes à 5 heures, de préférence pendant 1 à 3 heures, pour régler le potentiel rédox de l'eau de traitement sur 600 à 800 mV, de préférence sur 600 à 700 mV et encore plus préférablement sur 600 à 650 mV.

10. Procédé selon une des revendications 1 à 9, **caractérisé en ce que** l'eau de traitement avant et/ou après l'injection de la solution aqueuse contenant du dioxyde de chlore dans l'eau de traitement présente une température inférieure à 50 °C et de préférence inférieure à 45 °C.

11. Procédé selon une des revendications 1 à 10, **caractérisé en ce que** l'eau de traitement est filtrée en un ou plusieurs endroits de l'installation industrielle, de préférence avec un filtre à membrane.

12. Procédé selon une des revendications 1 à 11, **caractérisé en ce que** l'eau de traitement avant est conduite par le biais d'un bassin collecteur et que l'injection de la solution aqueuse contenant du dioxyde de chlore dans l'eau de traitement a lieu de préférence dans le bassin collecteur.

13. Procédé selon une des revendications 1 à 12, **caractérisé en ce que** la solution aqueuse contenant du dioxyde de chlore est fabriquée au moyen d'un procédé persulfate/chlorure.

14. Procédé selon une des revendications 1 à 13, **caractérisé en ce que** la solution aqueuse contenant du dioxyde de chlore est injectée directement dans l'eau de traitement après sa fabrication.
